# EUROPEAN PATENT SPECIFICATION

(11) **EP 0 276 744 B1**
(45) Date of publication and mention of the grant of the patent: **18.08.1993**
(21) Application number: 88100780.1
(22) Date of filing: 20.01.1988
(51) Int. Cl.: G11B 19/28, G11B 27/30, G11B 5/55

(54) **Synchronous rotation control system of magnetically recording disk**
Synchrones Umdrehungsregelungssystem für eine magnetische Speicherplatte
Système de commande de rotation synchrone de disque d'enregistrement magnétique

(30) Priority: 29.01.1987 JP 19389/87
(43) Date of publication of application: 03.08.1988
(73) Proprietor: FUJITSU LIMITED, Kawasaki-shi, Kanagawa 211 (JP)
(72) Inventor: Hatagami, Toshifumi FUJITSU LIMITED Pat. Dept., Nakahara-ku Kawasaki-shi Kanagawa 211 (JP); Iwatsubo, Masahito FUJITSU LIMITED Pat. Dept., Nakahara-ku Kawasaki-shi Kanagawa 211 (JP); Shinohara, Tooru FUJITSU LIMITED Pat. Dept., Nakahara-ku Kawasaki-shi Kanagawa 211 (JP)
(74) Representative: Sunderland, James Harry

(56) References cited:
- EP-A- 0 199 425
- GB-A- 2 128 780
- GB-A- 2 150 322
- US-A- 3 893 178
- US-A- 4 638 375
- PATENT ABSTRACTS OF JAPAN vol. 8, no. 151 (P-286) 13 July 1984;& JP-A-59048872
- PATENT ABSTRACTS OF JAPAN vol. 9, no. 90 (P-350)(1813) 19 April 1985;& JP-A-59218671
- PATENT ABSTRACTS OF JAPAN vol. 10, no. 52 (P-432)(2109) 28 February 1986;& JP-A-60195773

## Description

The present invention relates to magnetically recording disk apparatus, particularly to control for synchronous rotation of the disks of the apparatus.

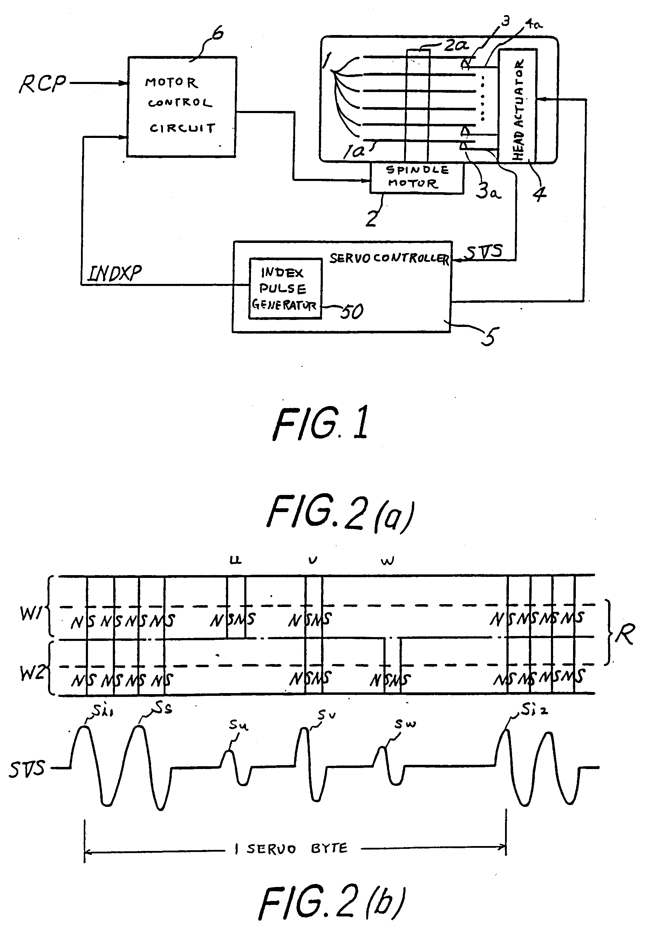

As shown in Fig. 1, in a previously proposed magnetically recording disk system, a plurality of recording disks 1 (and 1a) rotate all together on a single spindle 2a, driven by a spindle motor 2, and magnetic heads 3 and 3a for reading/writing data on surfaces of the disks move all together on a head actuator 4, driven by a servo controller 5, to seek a particular cylinder across the cylinders of the apparatus and to keep station at a particular cylinder.

In order to seek a particular cylinder, and to detect rotation of the disks, a servo surface 1a is provided as one of the surfaces of the disks 1, and a magnetic head 3a is provided for the servo surface 1a, as one of the above-described heads. This servo head 3a reads out servo information SVS, including index marks and guard band patterns, magnetically written on servo tracks on the servo surface 1a. An index mark is written by a servo track writer, which is not shown in the Figure, between a first sector and a last sector of each cylinder, i.e. the index mark is read once per single rotation of the disks. From amongst the servo information SVS, an index mark is detected by an index pulse generator 50, such detections signalling single rotations of the disks, and is used for servo controlling rotation of the disks, being fed back via a motor control circuit 6 to the spindle motor 2 by which the disks are rotated. An index mark typically utilizes sequential bit positions. The magnetized pattern made up of single bits of the servo information SVS, i.e. of a servo Byte, is typically as shown in Fig.2(a), where W1 and W2 denote two neighbouring cylinders respectively, and N and S denote magnetizations. Generally, bits Si₁ to Si₂ are called index bits, and bit Ss is called a sync bit. Bits from Si₁ to Si₂ make up a single servo Byte. A sync bit Ss is written in each servo Byte, and used as a reference clock for generating an apparatus clock. Index bits Si₁ and Si₂ are used to code an index mark or a guard band.

The servo head 3a travels along the border line between, and upon half of each of, two neighbouring cylinders W1 and W2 as indicated by broken lines and reference sign R, while other heads, for reading/writing stored data, travel each along a single track corresponding to one cylinder, e.g. W1 or W2.

A detection signal waveform provided by the servo head 3a is illustrated in Fig. 2(b).

Comparison between detected signals "Su" produced from bit position "u" of cylinder W1 and detected signal "Sw" produced from bit position "w"of cylinder W2, indicates the location of the servo head 3a with respect to the two neighbouring cylinders W1 and W2. In other words, this comparison indicates how correctly the head is tracing the particular cylinders involved.

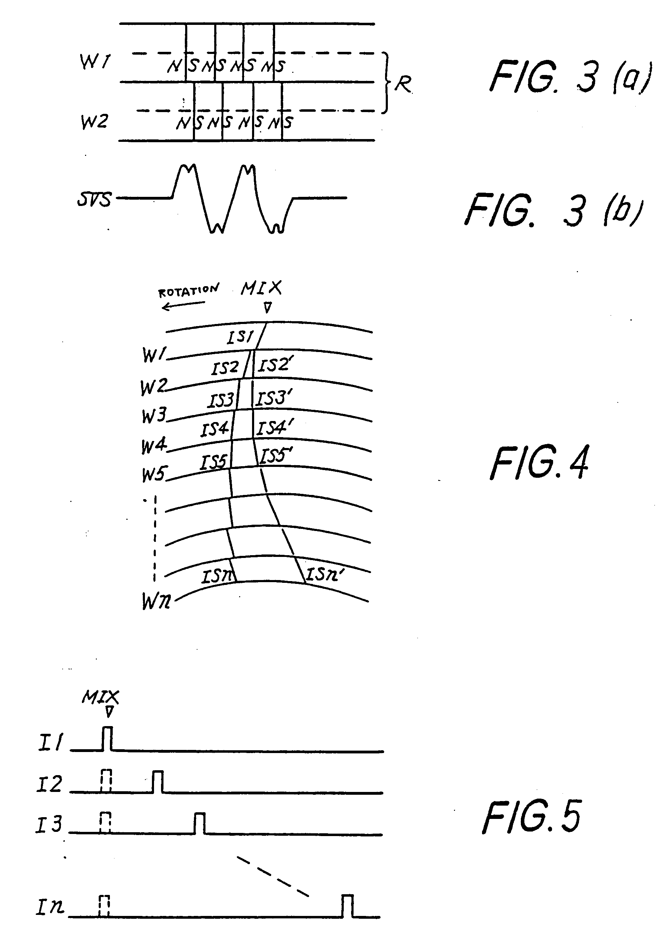

A bit position at which both of the adjacent servo cylinders are written, such as bit position "v", produces a signal "Sv" (of Fig. 2(b)) having a relatively large amplitude. As indicated above, an index mark indicating rotations of the disks is composed of such signals or pulses. Therefore, if the magnetic patterns of the written bits on two neighbouring cylinders are discontinuous one to the other, i.e. deviate from one another, as shown in Fig. 3(a), peaks of the detected signals therefrom are distorted as illustrated in Fig. 3(b). Such distortion of peaks reduces accuracy of timing detection of the index mark, i.e. disk rotation, and tracking accuracy.

Recently, pluralities of magnetically recording disk apparatuses have been used in parallel in computer systems. In such cases, rotation of the disks in different disk apparatuses have to be synchronized With each other, i.e. locked with an external synchronization pulse, as described in unexamined Japanese patent application No. Sho 59-218671 by T. Negoro. Thus, index marks are required to generate an actuated (actual) timing signal of disk rotation.

In magnetically recording disk systems of compact or medium size, rotational arms are generally used for actuating heads to move across cylinders. In such cases, the alignment of a magnetized pattern corresponding to a written bit, which is parallel to the core gap of the head (and indicated in Figs. 2(a) and 3(a) by lines having characters N and S to opposite sides thereof), cannot always be orthogonal to the movement of the cylinder. Therefore, a read/write head on a rotational actuator generally has an azimuth (which is an angle between the core gap of the head and the radial line of a disk on which the head presently lies) and an offset angle (which is an angle of deviation of the core gap of the head from the tangential line of the rotational movement of the head). A choice is made for azimuth and offset angle such that the azimuth is zero on the innermost cylinder, where read signal level is the least. Wave forms are distorted as described above. Azimuth varies depending on the cylinder on which a head is located.

A disk (a disk apparatus) is provided with a mechanical index, which is for example a single optical mark which is detected by an optical detector. If an attempt is made to write index marks essentially in synchronization with, or with a constant phase difference from, the reference angular position, i.e. the mechanical index, denoted by MIX in Fig. 4, the magnetized marks on each cylinder become discontinuous with those on neighbouring cylinders, as illustrated by ISl to ISn in Fig. 4, and also indicated to an enlarged scale in Fig. 3(a).

The locations of the index marks on the cylinders may be shifted so that the magnetized marks on neighbouring cylinders are continuous with one another as illustrated by IS2ʹ to ISnʹ in Fig. 4 (see unexamined Japanese Patent Application No. Sho 59-48872, M. Sasaki).

In this way, though there is no discontinuity between magnetized marks, and accordingly no distortion is generated in a detection signal, a problem arises in that index signals I₂ to Iₙ detected on the basis of the written index marks IS2ʹ to Isnʹ suffer respective different delays from the timing of the mechanical index, as illustrated in Fig. 5, in which Figure pulses indicated by broken lines show the timings at which index signals should be located without effects of delays.

For synchronous control of a plurality of disk apparatuses, servo control is effected so that phase differences between an external rotational synchronisation pulse RCP and each of index pulses I₁ to Iₙ become zero.

However, the above-described non-constant and differential delays of index pulses, depending on the cylinder being read, can result in large phase changes in a servo control circuit when a head jumps across cylinders to seek a new cylinder. The amount of phase difference between cylinders, for example in a disk apparatus having a 10.5 inch diameter and having 1024 cylinders, is as follows. The phase difference between the index marks on neighbouring cylinders is approximately 40 ns. Therefore, when the head moves from the innermost (or outermost) cylinder to the outermost (or innermost) cylinder, when seeking, it accumulates a phase difference of approximately 40 µs. This amount, even though it is reduced when seeking between less widely separated cylinders, is approximately 0.24% of the rotation cycle time of disk apparatus having a rotational speed of 3600 rpm. This is more than enough to cause an error to keep the cylinder within a specified period, such as a single sector period, because the response characteristics of the servo loop of the motor control system may generate an overshoot during cylinder seeking. This may cause not only a problem in that the synchronizing servo may, be disturbed so much that the servo loses control, but also a problem in that synchronous parallel reading out from a plurality of disk apparatuses cannot be accomplished without undue delay.

According to the present invention there is provided a magnetic disk apparatus including:
means for moving a magnetically reading/writing head across spirally or coaxially provided recording cylinders of the disks of the apparatus;
an index mark magnetically written in respect of each cylinder, the index marks being positioned so as to be continuous between adjacent cylinders and to comprise different angular positions with regard to the radius of a reference angular position for disk rotation; and
a servo control mechanism for synchronizing rotation of the disks with a given synchronization pulse by reading out the index marks;
characterised by
delay means for delaying index signals, read out from index marks, such that the difference between the phase of the delayed index signals and a reference phase corresponding to the radius of the reference angular position for disk rotation is essentially constant regardless of the cylinders in respect of which the read out index signals are provided.

An embodiment of the present invention can provide magnetically recording disk apparatus utilizing a rotational arm for actuating read/write heads to move across its spirally or coaxially provided reading cylinders, in which index marks for signalling disk rotation are magnetically written for the cylinders along a line deviating from a radial line of the disks of the apparatus so that the magnetized patterns of the index marks on neighbouring cylinders are continuous with one another.

An embodiment of the present invention can provide a synchronous rotation control system for magnetically recording disk apparatus, in which synchronous rotation control can be accurately and quickly carried out substantially free from, or suffering to a mitigated extent from phase change effects in relation to disk rotation signals when read/write heads installed on rotational arms jump across cylinders to seek a particular cylinder.

An embodiment of the present invention can provide for quick access of a stored data system having a plurality of synchronized disk apparatuses.

In an embodiment of the present invention, index marks for signalling single disk rotations are written, in advance, magnetically at a particular position for each cylinder, so that these magnetic marks on two neighbouring cylinders are continuous with one another.

Accordingly, each of the index marks is located with a delay from a reference angular position of the disks, which delay depends on the cylinder on which the heads and index mark are located. A delay circuit delays a read out signal generated from an index mark to an extent according to the cylinder on which the heads (and index mark) are located, so that the index mark signals are delay compensated so as to be generated with an essentially constant delayed phase with respect to a reference angular position.

In an embodiment of the present invention, the delay circuit may be composed of a digital counter which counts a predetermined number of clock pulses. The number to be counted is determined according to the cylinder on which the heads are located. When a cylinder address number is used for setting the number to be counted in the counter, address numbers of respective cylinder may be chosen so as to simply increase or decrease, from cylinder to cylinder, from the innermost cylinder to outermost, or vice versa.

Reference is made, by way of example, to the accompanying drawings, in which:-
Fig. 1 schematically illustrates a configuration for synchronous rotation control of magnetically recording disks;
Fig. 2(a) schematically illustrates magnetized patterns forming a single servo Byte with index marks continuous across two neighbouring cylinders;
Fig. 2(b) illustrates a signal waveform provided by a servo head detecting the single servo Byte of Fig. 2(a);
Fig. 3(a) schematically illustrates discontinuity of index mark magnetic patterns across neighbouring cylinders;
Fig. 3(b) illustrates a signal waveform provided by a servo head when detecting the index marks of Fig. 3(a);
Fig. 4 schematically illustrates index marks which are continuous across neighbouring cylinders;
Fig. 5 schematically illustrates index pulses detected from the index marks of Fig. 4;
Fig. 6 schematically illustrates apparatus in accordance with an embodiment of the present invention;
Fig. 7 schematically illustrates delayed index pulses generated in accordance with an embodiment of the present invention;
Fig. 8 illustrates in more detail a configuration of apparatus embodying the present invention and as shown in Fig. 6;
Fig. 9 illustrates in more detail a delay circuit employed in an embodiment of the present invention;
Fig. 10 shows timing charts illustrating signals arising in operation of the circuitry of Figs. 8 and 9; and
Fig. 11 is a graph illustrating phase relationships of index marks and delayed index marks to cylinder address numbers.

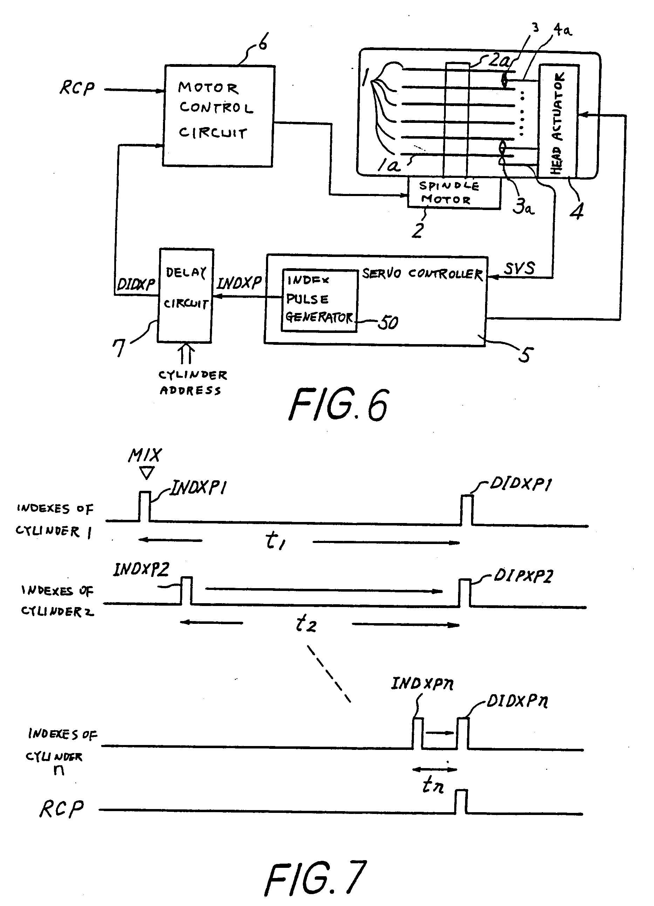

An embodiment of the present invention will now be described in outline, with reference to Figs. 6 and 7.

Magnetic recording disks 1, 1a and heads 3, 3a are as in Fig. 1 (except that heads are provided for reading both surfaces of each disk). A read-write head 3 or 3a is situated on an open end of a rotational arm 4a rotating around an axis which is not shown in Fig. 6 but which is parallel to the axis of spindle 2a of the disks, driven by a head actuator 4. The spindle is driven by spindle rotor 2. Index marks are magnetically recorded in advance, in relation to each cylinder, on servo disk surface 1a, so that the index marks on neighbouring cylinders are continuous with each other, as indicated above and for example illustrated by Is2ʹ to Isnʹ in Fig. 4. An index pulse forming circuit 50 in a servo controller 5 receives a processed signal derived from servo information SVS detected by servo head 3a from an index mark, then outputs an index pulse INDXP. The servo controller 5 also controls the head actuator 4, according to commands from an upper processing device or controller, to seek and keep station at a particular cylinder. A delay circuit 7 outputs a delayed index pulse DIDXP by delaying the index pulse INDXP received from the index forming circuit 50 by an amount which depends upon the cylinder on which the head (3a) is located. Different delay amounts (relating to different cylinders) are selected so that the non-constant delays of index pulses derived from different cylinders are compensated by generating delayed index pulses DIDXP essentially with the same phase relation, i.e. the same timing, with respect to a mechanical index as mentioned above, regardless of the cylinder on which the head is located.

This is explained in Fig. 7: an index pulse INDXP1, detected from the index mark Isl of cylinder W1, suffering no delay from the mechanical index MIX, in this example, as shown in Fig. 4, is delayed by a period t₁ thus to become a delayed index pulse DIDXPl, whilst a delay period t₂ for a second index pulse INDXP2, relating to the second cylinder W2, is made shorter than t₁, and so on. Thus, the last index pulse INDXPn of the last cylinder Wn is delayed by tₙ, the least delay. In this way, all the delayed index pulses DIDXPl to DIDXPn are generated at the essentially same timing, which is t₁ after the mechanical index MIX.

The delay periods may be predetermined such that the delay times t₁ to tₙ have a linear relationship to cylinder address number (supplied to the delay circuit 7).

A motor controller 6 detects phase difference between delayed index pulse DIDXP and a rotation synchronization pulse RSP provided from an external controller, and drives spindle motor 2 which rotates the spindle 2a and disks 1 mounted thereon so as to make this phase difference zero, i.e. so as to accomplish a synchronous servo control of the spindle motor. Accordingly, each of the delayed index pulses DIDXPl to DIDXPn (Fig. 7) which are all generated at an essentially constant phase angle, is servo controlled to be synchronized with the rotation synchronous pulse RCP, as seen in Fig. 7.

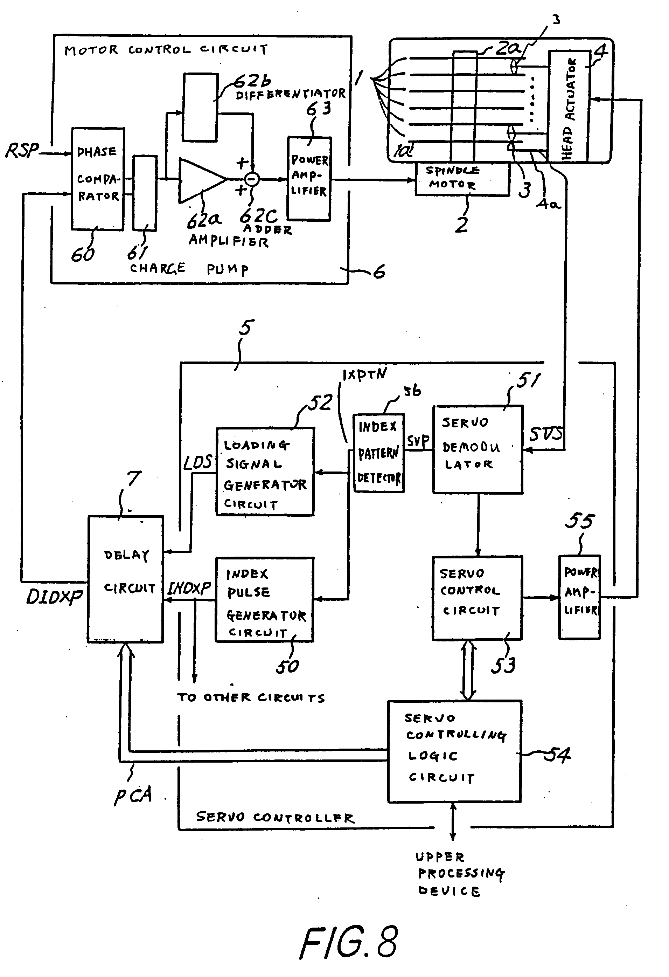

A practical circuit configuration of an embodiment of the present invention is illustrated in Fig. 8.

Servo information SVS from servo head 3a having, for example, a waveform as illustrated in Fig. 2(b) is demodulated by a servo demodulator 51 and is output to a tracking servo and to a rotation servo. A servo control logic circuit 54 transmits to a servo control circuit 53 an address number of a cylinder which the head is to move across (is to move to) according to an instruction received from an upper processing device (controller), and acquires status information of the present head location (cylinder address), from track crossing information, etc., from the servo control circuit 53. The servo control circuit 53, receiving an instruction to seek a particular cylinder from servo controlling logic circuit 54, and receiving servo information from the servo demodulator 51, transmits a signal to a power amplifier 55 to drive the head actuator 4 so that the heads move across to then keep in location at the particular cylinder.

In this embodiment of the invention, cylinder addresses are denoted by numerals, allotted to respective cylinders from the outermost to the innermost, as indicated in Fig. 4.

A practical circuit configuration, and the function of, delay circuit 7 provided in this embodiment of the present invention will be described below.

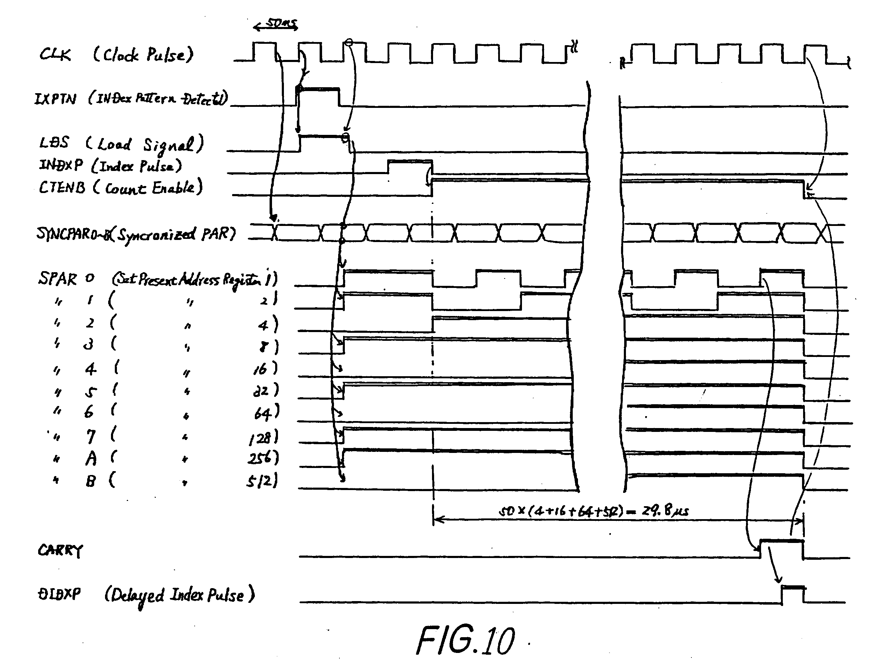

A servo pulse SVP for the disk rotation servo is output from the servo demodulator 51 and input to an index pattern detector 56, which recognizes the pattern of an index mark from sequences of servo pulses SVP, and then outputs a single pulse, which is an index pattern detected pulse IXPTN. This index pattern detected pulse IXPTN is input into a loading signal generator circuit 52 and an index pulse generator circuit 50. Then, the loading signal generator circuit 52 generates a loading signal LDS, and the index pulse generator circuit 50 generates an index pulse INDXP delayed, for example, two clock cycles after the loading signal LDS, each having a pulse width of, for example a single clock cycle, as illustrated in Fig. 10. The index pulse INDXP is used for synchronous rotation servo control as described below (supplied with LDS to delay circuit 7), and also may be supplied to other circuits which are not related to the present invention. In some of the waveforms in Fig. 10, a high signal or pulse level is illustrated by a double parallel line.

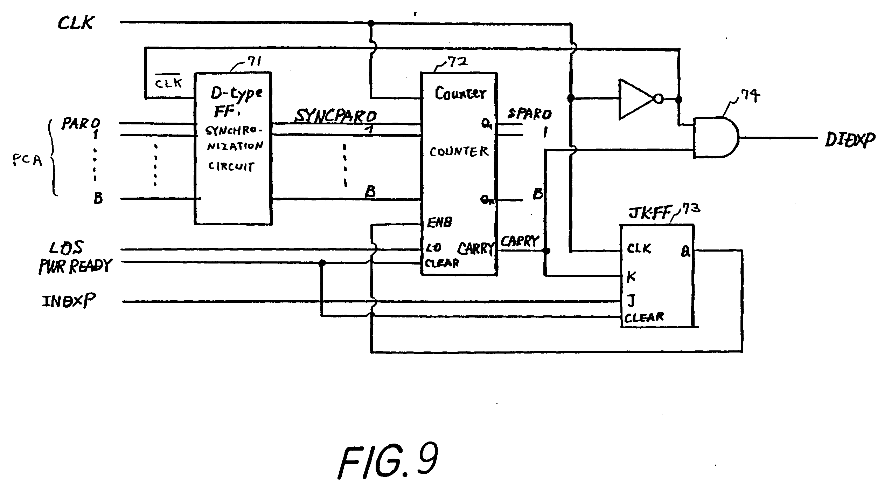

Details of an example of a configuration of delay circuit 7 are illustrated in Fig. 9. A synchronization circuit 71 in delay circuit 7 is a latch circuit composed of D-type flip-flops and is always supplied with a present cylinder address PCA, which consists of parallel signals PAR0 to PARB, from servo control logic circuit 54, and outputs signals PCA as "synchronized PAR, syncpar 0 to B" in parallel, synchronized with an inverted clock pulse CLK.

Initiated by the rising edge of an IXPTN pulse, loading signal generator circuit 52 generates a loading signal LDS having a predetermined appropriate period, which in this case is chosen to correspond to a single cycle or more of the clock pulse CLK, as shown in Fig. 10. The falling edge of the loading signal LDS initiates loading of the above-mentioned SYNCPAR signals into a counter 72 of the delay circuit 7. Thus, the counter 72 is loaded with the present cylinder address PCA on which the head is located. A count-enable signal ENB (CTENB) initiated by an index pulse INDXP (which will be explained later) makes the counter 72 start to count clock pulses CLK input thereto additionally to the already loaded PCA number, and then output a carry signal CARRY when the counted number reaches a predetermined number, or overflows. A preset circuit 73 consists of a flip-flop, which is set in synchronism with a clock pulse CLK by an index pulse INDXP from the index pulse generator circuit 50, and is reset by a carry signal CARRY then outputs a countenable signal ENB to the counter 72. An AND gate 74 outputs a logical product of the carry signal CARRY and the inverted clock pulse C̅L̅K̅, and thus outputs a delayed index signal DIDXP.

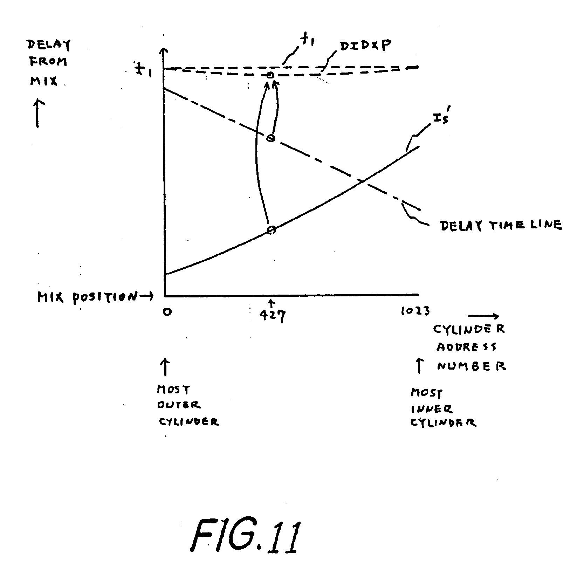

General operation of an embodiment of the present invention is as follows. Assuming that the total number of cylinders and the capacity of the counter 72 are both 1024, and the head is presently located on a particular cylinder whose number is $\text{1+2+8+32+128+256 = 427}$ , this address information is stored in the servo control logic circuit 54 for seeking a cylinder. Cycle time of the clock pulse is properly chosen as described later. The index mark of this cyclinder (address number 427) is read by the servo head 3a, demodulated by the servo demodulator 51, recognized/detected by the index detector 56 and input to both the loading signal generator circuit 52 and the index pulse generator circuit 50. Then the loading signal generator circuit 52 causes the counter 72 to be loaded with the present cyclinder address information SPAR 0 to B corresponding to the above-mentioned cylinder address 1+2+8+32+128+256, as illustrated in Fig. 10, from the servo control circuit 54 via the synchronization circuit 71. After being delayed by two clock cycles, the falling edge of the index pulse INDXP enables the counter to count the clock pulses in addition to the already loaded address number. When the counted number reaches a predetermined number, which in this case is the counter capacity, the counter 72 overflows and outputs a carry signal CARRY, which is output as a delayed index pulse DIDXP gated by the inverted clock pulse in the AND gate 74. The preset circuit 73 discontinues the count-enable signal in response to the carry signal CARRY, and accordingly the counter discontinues its output signal CARRY. The delay time provided by the circuit 72 in this case is $\text{40 ns × (4+16+64+512) = 20.5 µs}$ 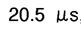 , where $\text{4+16+64+512 = 596}$ indicates the complement of the present cylinder address for the total number of cylinders 1024 (0 to 1023) in this case. This is also explained in Fig. 11. The delay time of the delay circuit 72 is in linear relationship to the cylinder address number as shown by a straight chain line (a delay time line) in Fig. 11. Locations of delayed index pulses DIDXP are illustrated by broken line DIDXP in Fig. 11. The DIDXP line corresponds to the sum of the line ISʹ and the delay time line. Because of the rotational nature of the movement of the arm of the head, the ISʹ line is not strictly a straight line. Therefore, the DIDXP line becomes an approximately straight line, which, however, lies close to a line corresponding to time t₁ (which was referred to in Fig. 7). This is also because the cycle time 40 ns of the clock pulse CLK has been chosen so that this delay time line (chain line) in Fig. 11 becomes essentially the complement of the line ISʹ, so that the DIDXP line falls nearly on a straight line t₁ having essentially constant delay from the mechanical index MIX. In other words, the cycle time may be chosen to be an integral multiple of a deviation of an index mark ISʹ from that of an adjacent cylinder. Or, the cycle time may be approximately determined by, for example, (a) the total sum of deviations of the index marks ISʹ of adjacent cylinders divided by (b) the total number of cylinders minus one. Thus, the broken line DIDXP can be considered to correspond to an essentially constant phase delay after the mechanical index MIX.

This delayed index pulse DIDXP is input to a phase comparator 60 (Fig. 8), which compares the delayed index pulse DIDXP with a rotational synchronization pulse RSP from an external controller, for providing synchronous operation of a plurality of disk apparatuses, then outputs the phase difference. This difference output causes supply of a current according to the phase difference, to charge a capacitor installed in a charge pump 61, and thus produces a voltage across the capacitor. The output voltage of the charge pump 61 is phase-compensated by a phase compensation circuit which consists of amplifier 62a, differentiator circuit 626 and adder circuit 62c, then controls, via the power amplifier 63, the rotation of the spindle motor 2. Thus, the spindle motor 2 is controlled to have the same phase as that of the delayed index signal DIDXP, i.e. is locked therewith, regardless of the cylinder on which the head is located.

In this embodiment of the invention, the above-mentioned phase difference, approximately 40 µs, between the innermost and outermost cylinders is reduced to almost zero. Thus, the rotation of disk indexes are delayed an essentially constant phase or time after the mechanical index regardless to the cylinder on which the head is located. Therefore, even when a plurality of disk apparatuses are required to be synchronized, all the disks can be locked to the external synchronization pulse.

Though in the above-described embodiment of the invention the delay circuit provides different delays of each index pulse INDXP for each different cylinder, different delays may be provided only in respect of different groups of cylinders, each group having, for example, four cylinders. In other words, the index pulses INDXP of, for example, four neighbouring cylinders may be grouped to be delayed by a common delay time. In this case, the cycle period of clock pulses CLK may be chosen to be 160 ns. The accuracy with which constant phase is maintained for delayed index pulses DIDXP is worse in this case than in the above-described embodiment, but accuracy is still high enough for practical usage. Further, it is rather advantageous that the circuit configuration can be simpler and less expensive. Though four is mentioned as a possible number of cylinders in a group, different numbers may be grouped. What numbers may be used is largely dependent on the amount of the azimuth, and accordingly on the deviation of two neighbouring cylinders, because the amount of the azimuth gives a direct effect on the amount of the allowable phase change on seeking a cylinder.

Though in the above-described embodiment of the invention the delay circuit 7 is composed of a digital counter generating a delay time which is in linear relationship to the cylinder number (the address number of the cylinder) on which the head is located, the delay circuit may be provided on a different basis. For example, in order to compensate for the non-linear locations of the index marks ISl to ISnʹ with respect to cylinder number, as illustrated by the arc of the Isʹ line in Fig. 11, delay times t₂ to tₙ may be programmed for each cylinder so as to generate really or even more constantly delayed pulses regardless of the cylinder on which the head is located. The delay time for each cylinder may be stored in a solid state memory, for instance a look-up table. Or, as another example, the delay circuit 7 may be an analog circuit.

Though in the above-described embodiment of the invention one of the disk surfaces and one of the magnetic heads are exclusively used for servo control of disk rotation and tracking, embodiments of this invention can be applied to disk configurations in which an exclusive servo surface and servo head are not provided, but a part of a data track is spared to carry servo information.

Though in the above-described embodiment of the invention the read/write head is moved by an arm mechanism for a seeking operation, embodiments of the present invention can be applied in cases in which the head is moved by a linear motion mechanism, when an azimuth exists.

In an embodiment of the present invention, index marks as indications of single rotations of a magnetically recording disk apparatus are written so that magnetized patterns on neighbouring cylinders are continuous with each other, in order to output non-distorted index pulse signals. However, this arrangement forces the index locations on different cylinders to be delayed from a reference angular position of disk rotation by amounts depending on the cylinder on which a read head is located, differing from cylinder to cylinder, thus outputting index signals at non-constant phase angles. A delay circuit compensates for this non-constant phase output by further delaying read out index signals. The delay time introduced by the delay circuit depends on the cylinder on which the head is located, and is chosen so that the further delayed index signals are generated at an essentially constant phase angle with respect to the reference angular position regardless of the cylinder involved. The delay circuit may be composed of a counter which is previously loaded with an address number of the cylinder on which the head is located, then counts a number of clock pulses additionally input to the counter. Overflow of the counter generates the compensated index signal. Thus, synchronous operation of a plurality of disk apparatuses is quickly achieved, when heads seek a new cylinder.

## Claims

1. Magnetic disk apparatus including:
means (4) for moving a magnetically reading/writing head (3a) across spirally or coaxially provided recording cylinders (W) of the disks of the apparatus;
an index mark (IS) magnetically written in respect of each cylinder (W), the index marks being positioned so as to be continuous between adjacent cylinders and to comprise different angular positions with regard to the radius of a reference angular position (MIX) for disk rotation; and
a servo control mechanism (5, 6) for synchronizing rotation of the disks with a given synchronization pulse (RSP) by reading out the index marks; characterised by
delay means (7) for delaying index signals (INDXP), read out from index marks, such that the difference between the phase of the delayed index signals (DIDXP) and a reference phase corresponding to the radius of the reference angular position for disk rotation is essentially constant regardless of the cylinders in respect of which the read out index signals are provided.

2. Apparatus according to claim 1, wherein the means for moving the magnetically reading/writing head (3a) comprises an arm (4a) which rotates in a plane parallel to a disk surface, in respect of which the head is provided, around an axis provided at an end of the arm opposite from the head.

3. Apparatus according to claim 1 or 2, wherein said delay means (7) includes a digital counter (72) which counts clock pulses (CLK) input thereto, a number of clock pulses to be counted being predetermined depending on the cylinder (W) at which the head (3a) is currently located, from which an index signal (INDXP) is read, and said counter enables the read index signal to be output as a delayed index signal (DIDXP) when the counter finishes counting said predetermined number.

4. Apparatus according to claim 3, wherein the cylinders (W), from the innermost to the outermost are addressed by numbers of a simply increasing or a simply decreasing sequence.

5. Apparatus according to claim 4, wherein the number of clock pulses to be counted in relation to a particular cylinder (W) is in essentially linear relationship to the cylinder address number of that cylinder.

6. Apparatus according to claim 1 or 3, wherein the numbers of clock pulses to be counted for different cylinders (W) are stored in memory means in relationship to cylinder address numbers, the numbers of clock pulses to be counted being predetermined so that delayed index signals (DIDXP) are generated at an essentially constant phase angle with respect to the reference phase.

7. Apparatus according to claim 3, 4, 5 or 6, wherein the number of clock pulses to be counted for each cylinder is predetermined commonly for a group of neighboring cylinders.

8. Apparatus according to claim 3, 4, 5, 6 or 7, wherein clock pulse cycle time is chosen to be approximately an integral multiple of a difference of delay times between index marks written in respect of two neighboring cylinders.

9. Apparatus according to claim 7, wherein clock pulse cycle time is chosen to be approximately an integral multiple of a difference of delay times between index marks written in respect of two neighboring cylinder groups.

10. Apparatus according to claim 3, 4, 5, 6 or 7, wherein clock pulse cycle time is chosen to be an integral multiplication of approximately (a) the total sum of the deviations between index marks from adjacent cylinders divided by (b) the total number of cylinders minus one.

## Patentansprüche

1. Magnetplattenvorrichtung mit:
Mittel (4) zum Bewegen eines Magnetlese-/-schreibkopfes (3a) quer über spiralig oder koaxial vorgesehene Aufzeichnungszylinder (W) der Platten der Vorrichtung;
einer Indexmarke (IS), die bezüglich jedes Zylinders (W) magnetisch geschrieben wurde, wobei die Indexmarken so positioniert sind, um zwischen benachbarten Zylindern zusammenhängend zu sein und hinsichtlich des Radius einer Bezugswinkelposition (MIX) zur Plattenrotation verschiedene Winkelpositionen zu umfassen; und
einem Servosteuerungsmechanismus (5, 6) zum Synchronisieren der Rotation der Platten mit einem gegebenen Synchronisierungsimpuls (RSP) durch Auslesen der Indexmarken; gekennzeichnet durch
Verzögerungsmittel (7) zum Verzögern von Indexsignalen (INDXP), die von Indexmarken ausgelesen wurden, so daß die Differenz zwischen der Phase der verzögerten Indexsignale (DIDXP) und einer Bezugsphase, die dem Radius der Bezugswinkelposition zur Plattenrotation entspricht, im wesentlichen konstant ist, ungeachtet der Zylinder, bezüglich derer die ausgelesenen Indexsignale vorgesehen sind.

2. Vorrichtung nach Anspruch 1, bei der das Mittel zum Bewegen des Magnetlese-/-schreibkopfes (3a) einen Arm (4a) umfaßt, der in einer Ebene parallel zu einer Plattenoberfläche, hinsichtlich derer der Kopf vorgesehen ist, um eine Achse rotiert, die an einem Ende des Armes gegenüber dem Kopf vorgesehen ist.

3. Vorrichtung nach Anspruch 1 oder 2, bei der die genannten Verzögerungsmittel (7) einen digitalen Zähler umfassen, der Taktimpulse (CLK) zählt, die ihm eingegeben wurden, wobei eine Zahl von zu zählenden Taktimpulsen in Abhängigkeit von dem Zylinder (W), auf dem sich der Kopf (3a) zur Zeit befindet, von dem ein Indexsignal (INDXP) gelesen wird, vorbestimmt ist, und welcher Zähler das Leseindexsignal freigibt, das als verzögertes Indexsignal (DIDXP) auszugeben ist, wenn der Zähler das Zählen der vorbestimmten Zahl beendet.

4. Vorrichtung nach Anspruch 3, bei der die Zylinder (W) von dem innersten zu dem äußersten durch Zahlen einer einfach zunehmenden oder einfach abnehmenden Folge adressiert sind.

5. Vorrichtung nach Anspruch 4, bei der die Zahl von zu zählenden Taktimpulsen hinsichtlich eines speziellen Zylinders (W) in im wesentlichen linearer Beziehung zu der Zylinderadreßzahl jenes Zylinders steht.

6. Vorrichtung nach Anspruch 1 oder 3, bei der die Zahlen von zu zählenden Taktimpulsen für verschiedene Zylinder (W) in einem Speichermittel in Beziehung zu Zylinderadreßzahlen gespeichert sind, wobei die Zahlen von zu zählenden Taktimpulsen vorbestimmt sind, so daß verzögerte Indexsignale (DIDXP) mit einem im wesentlichen konstanten Phasenwinkel bezüglich der Bezugsphase erzeugt werden.

7. Vorrichtung nach Anspruch 3, 4, 5 oder 6, bei der die Zahl von zu zählenden Taktimpulsen für jeden Zylinder für eine Gruppe von benachbarten Zylindern gemeinsam vorbestimmt ist.

8. Vorrichtung nach Anspruch 3, 4, 5, 6 oder 7, bei der die Taktimpulszykluszeit gewählt wird, um annähernd ein ganzzahliges Vielfaches einer Differenz von Verzögerungszeiten zwischen Indexmarken zu sein, die bezüglich zweier benachbarter Zylinder geschrieben sind.

9. Vorrichtung nach Anspruch 7, bei der die Taktimpulszykluszeit gewählt wird, um annähernd ein ganzzahliges Vielfaches einer Differenz von Verzögerungszeiten zwischen Indexmarken zu sein, die bezüglich zweier benachbarter Zylindergruppen geschrieben sind.

10. Vorrichtung nach Anspruch 3, 4, 5, 6 oder 7, bei der die Taktimpulszykluszeit gewählt wird, um eine ganzzahlige Vervielfachung von annähernd (a) der Gesamtsumme der Abweichungen zwischen Indexmarken von benachbarten Zylindern geteilt durch (b) die Gesamtzahl von Zylindern minus eins zu sein.

## Revendications

1. Appareil à disque magnétique incluant :
un moyen (4) pour déplacer une tête de lecture/écriture magnétique (3a) au travers des cylindres d'enregistrement prévus en spirale ou de façon coaxiale (W) des disques de l'appareil ;
un repère d'indexage (IS) écrit magnétiquement en relation avec chaque cylindre, (W), les repères d'indexage étant positionnés de manière à être continus entre des cylindres adjacents et de manière à comprendre différentes positions angulaires par rapport au rayon d'une position angulaire de référence (MIX) pendant la rotation du disque ; et
un mécanisme de commande d'asservissement (5, 6) pour synchroniser la rotation du disque avec une impulsion de synchronisation donnée (RSP) en lisant les repères d'indexage ;
caractérisé par :
un moyen de retard (7) pour retarder des signaux d'indexage (INDXP) lus à partir des repères d'indexage de telle sorte que la différence entre la phase des signaux d'indexage retardés (DIDXP) et une phase de référence correspondant au rayon de la position angulaire de référence pendant la rotation du disque soit essentiellement constante indépendamment des cylindres en relation avec lesquels les signaux d'indexage lus sont produits.

2. Appareil selon la revendication 1, dans lequel le moyen pour déplacer la tête de lecture/écriture magnétique (3a) comprend un bras (4a) qui tourne dans un plan parallèle à une surface de disque en relation avec lequel la tête est prévue, autour d'un axe prévu au niveau d'une extrémité du bras qui est opposée à la tête.

3. Appareil selon la revendication 1 ou 2, dans lequel ledit moyen de retard (7) inclut un compteur numérique (72) qui compte les impulsions d'horloge (CLK) qui lui sont entrées, un certain nombre d'impulsions d'horloge devant être comptées étant prédéterminé en fonction du cylindre (W) au niveau duquel la tête (3a) est présentement positionnée, à partir duquel un signal d'indexage (INDXP) est lu et ledit compteur permet l'émission en sortie du signal d'indexage lu en tant que signal d'indexage retardé (DIDXP) lorsque le compteur termine un comptage dudit nombre prédéterminé.

4. Appareil selon la revendication 3, dans lequel les cylindres (W), à partir du plus interne jusqu'au plus externe, sont adressés par des nombres d'une séquence croissante simple ou décroissante simple.

5. Appareil selon la revendication 4, dans lequel le nombre d'impulsions d'horloge devant être comptées par rapport à un cylindre particulier (W) présente une relation essentiellement linéaire par rapport au numéro d'adresse de cylindre de ce cylindre.

6. Appareil selon la revendication 1 ou 3, dans lequel les nombres d'impulsions d'horloge devant être comptées pour différents cylindres (W) sont stockés dans un moyen de mémoire en relation avec des numéros d'adresse de cylindre, les nombres d'impulsions d'horloge devant être comptées étant prédéterminés de telle sorte que des signaux d'indexage retardés (DIDXP) soient générés selon un angle de phase essentiellement constant par rapport à la phase de référence.

7. Appareil selon la revendication 3, 4, 5 ou 6, dans lequel le nombre d'impulsions d'horloge devant être comptées pour chaque cylindre est prédéterminé de façon commune pour un groupe de cylindres voisins.

8. Appareil selon la revendication 3, 4, 5, 6 ou 7, dans lequel le temps de cycle d'impulsion d'horloge est choisi de manière à être approximativement égal à un multiple entier d'une différence de temps de retard entre des repères d'indexage écrits en relation avec deux cylindres voisins.

9. Appareil selon la revendication 7, dans lequel le temps de cycle d'impulsion d'horloge est choisi de manière à être approximativement égal à un multiple entier d'une différence de temps de retard entre des repères d'indexage écrits en relation avec deux groupes de cylindres voisins.

10. Appareil selon la revendication 3, 4, 5, 6 ou 7, dans lequel le temps de cycle d'impulsion d'horloge est choisi de manière à être égal à une multiple entier d'approximativement (a) la somme totale des déviations entre des repères d'indexage issus de cylindres adjacents divisée par (b) le nombre total de cylindres moins un.
